# EUROPEAN PATENT SPECIFICATION

(11) **EP 1 991 021 B1**
(45) Date of publication and mention of the grant of the patent: **14.05.2014**
(21) Application number: 07737427.0
(22) Date of filing: 27.02.2007
(51) Int. Cl.: H04M 1/253, H04M 3/42, H04M 7/00, H04M 3/54, H04M 1/725, H04M 1/00, H04W 88/06

(54) **COMMUNICATION SYSTEM, MOBILE TERMINAL, INFORMATION TERMINAL, COMMUNICATION METHOD, AND PROGRAM**
KOMMUNIKATIONSSYSTEM, MOBILES ENDGERÄT, INFORMATIONSENDGERÄT, KOMMUNIKATIONSVERFAHREN UND PROGRAMM
SYSTEME ET PROCEDE DE COMMUNICATION, TERMINAL MOBILE, TERMINAL D'INFORMATION ET PROGRAMME

(30) Priority: 02.03.2006 JP 2006055650
(43) Date of publication of application: 12.11.2008
(73) Proprietor: NEC Corporation, Minato-ku Tokyo 108-8001 (JP)
(72) Inventor: KIKKAWA, Yasushi, Tokyo 108-8001 (JP)
(74) Representative: Betten & Resch
(86) International application number: PCT/JP2007/053625
(87) International publication number: WO 2007/099945

(56) References cited:
- EP-A1- 0 987 870
- WO-A1-2004/068742
- WO-A1-2005/109658
- JP-A- 2005 080 112

## Description

### TECHNICAL FIELD

The present invention relates to a mobile terminal, an information terminal, a communication method, and a program, in particular, to a mobile terminal loaded with radio LAN (Local Area Network) function.

### BACKGROUND ART

In recent years, mobile terminals such as a mobile telephone include a terminal having radio LAN function to connect to a radio LAN in addition to the function to connect to a mobile telephone network (e.g., patent documents 1 to 3).

The mobile telephone then can be connected to the same network (Internet) as a personal computer. Recently, calls can be made via Internet such as SKYPE (registered trademark), instant message, and the like.

Thus, it has been more convenient in mobile telephones as calls can be made via mobile telephone network and via the Internet, but at the same time, it is required to manage plural telephones (for calls via mobile telephone network and calls via the Internet).

Patent document 1: Japanese Patent No. 2005-532986
Patent document 2: Japanese Laid-Open Patent Publication No. 2002-190845
Patent document 3: Japanese Laid-Open Patent Publication No. 2001-103568

EP0987870A1 discloses a system for enabling voice communications outside a LAN telephone network to be accomplished by way of a wireless interface formed from a standard wireless telephone, such as a cellular telephone, and an adapter. The adapter is configured to interface a standard wireless telephone to the communication network, such that the wireless telephone may be used as a wireless trunk. In particular, a network user may originate a call intended for someone outside the network and the call will be routed to its destination over the wireless telephone network, via the wireless telephone. The network and the adapter communicate with each other using standard network signaling protocols. Likewise, communication between the adapter and the wireless telephone is performed using known cellular signaling protocols. The adapter functions as a protocol converter to translate between the network signaling and the wireless telephone signaling.

WO2005/10965SA1 presents a method of remotely controlling a wireless mobile device including the step of establishing a communication channel between the wireless mobile device and a remotely located controlling device. At least one operation is performed using an interface of the controlling device. Packetized data based upon the at least one operation are conveyed across the communication channel and a programmatic action is performed upon the wireless mobile device in response to receiving the packetized data.

### DISCLOSURE OF THE INVENTION

The present invention is defined in the independent claims. The dependent claims define advantageous embodiments thereof.

In the conventional mobile terminal described above, calls via the mobile telephone network and calls via the Internet become possible by loading the radio LAN function. However, when originating a call, the call needs to be made by dialing the other party's number, and it is bothersome to switch the two types of the calling methods when dialing every time. Furthermore, it is possible to receive a call via the mobile telephone network and via the Internet, by loading the radio LAN function in the conventional mobile terminal, and the presence of both originating and receiving of calls also leads to bothersome.

In order to resolve the above problems, it is an object of the present invention to provide a communication system, a mobile terminal, an information terminal, a communication method, and a program, capable of switching between a terminal for making a call via a mobile telephone network and a terminal for making a call via the Internet without a bothersome operation.

A communication system according to the present invention relates to a communication system including a mobile terminal having a radio LAN (Local Area Network) function, and an information terminal which can be radio LAN-connected to the mobile terminal, having a function of performing an Internet telephone, wherein the mobile terminal is controlled from the information terminal via the radio LAN to establish a call between the information terminal and the other party via the mobile terminal, and further, to establish a call between the information terminal and the other party by forwarding a call received at the mobile terminal to the information terminal via the radio LAN.

Another communication system according to the present invention relates to a communication system including a mobile terminal loaded with a radio LAN (Local Area Network) function, and an information terminal which can be radio LAN-connected to the mobile terminal, having a function of performing an Internet telephone, wherein the mobile terminal is controlled from the information terminal via the Internet to establish a call between the information terminal and the other party via the mobile terminal, and further, to establish a call between the information terminal and the other party by forwarding a call received at the mobile terminal to the information terminal via the Internet.

A mobile terminal according to the present invention relates to a mobile terminal having a radio LAN (Local Area Network) function and radio LAN-connected to an information terminal. The mobile terminal relays a call between the information terminal and the other party upon receiving an instruction from the information terminal via the radio LAN, and a call between the information terminal and the other party is established by forwarding a call received at the mobile terminal to the information terminal via the radio LAN.

Another mobile terminal according to the present invention relates to a mobile terminal loaded with a radio LAN (Local Area Network) function and radio LAN-connected to an information terminal. The mobile terminal relays a call between the information terminal and the other party upon receiving an instruction from the information terminal via the Internet, and a call between the information terminal and the other party is established by forwarding a call received at the mobile terminal to the information terminal via the Internet

A call originating/receiving control method according to the present invention relates to a call originating/receiving control method used in a mobile terminal having a radio LAN (Local Area Network) function and being radio LAN-connected to an information terminal. The mobile terminal executes a process of relaying a call between the information terminal and the other party upon receiving an instruction from the information terminal via the radio LAN, and a process of establishing a call between the information terminal and the other party by forwarding the call received at the mobile terminal to the information terminal via the radio LAN.

Another call originating/receiving control method according to the present invention relates to a call originating/receiving control method used in a mobile terminal having a radio LAN (Local Area Network) function and being radio LAN-connected to an information terminal. The mobile terminal executes a process of relaying a call between the information terminal and the other party upon receiving an instruction from the information terminal via the Internet, and a process of establishing a call between the information terminal and the other party by forwarding the call received at the mobile terminal to the information terminal via the Internet.

A program of a call originating/receiving control method according to the present invention relates to a program of a call originating/receiving control method used in a mobile terminal having a radio LAN (Local Area Network) function and being radio LAN-connected to an information terminal. The program causes a computer to execute a process of relaying a call between the information terminal and the other party upon receiving an instruction from the information terminal via the radio LAN, and a process of establishing a call between the information terminal and the other party by forwarding the call received at the mobile terminal to the information terminal via the radio LAN.

Another program of a call originating/receiving control method according to the present invention relates to a program of a call originating/receiving control method used in a mobile terminal having a radio LAN (Local Area Network) function and being radio LAN-connected to an information terminal. The program causes a computer to execute a process of relaying a call between the information terminal and the other party upon receiving an instruction from the information terminal via the Internet, and a process of establishing a call between the information terminal and the other party by forwarding the call received at the mobile terminal to the information terminal via the Internet.

In other words, the mobile terminal of the present invention has a radio LAN (Local Area Network) function, the mobile terminal is controlled from the personal computer etc. via the radio LAN to make a call to the other party, and the call received at the mobile terminal is forwarded to the personal computer via the radio LAN to establish the call. The call can be made even at a remote location via the Internet.

In the mobile terminal of the present invention, the mobile telephone and the Internet telephone are combined, so that the call is first attempted to be established via an Internet, which is toll free, and then switch is made to the call to the mobile terminal when the other party of the call is not connected to the Internet (not logged in).

Therefore, in the mobile terminal of the present invention, switching between a terminal for making the call via the mobile telephone network and a terminal for making a call via the Internet can be carried out without a bothersome operation by loading the radio LAN and operating the mobile terminal from the personal computer via the radio LAN to originate the call, or by forwarding the call received at the mobile terminal to the personal computer via the radio LAN to establish the call.

According to the configuration and the operation described above, the present invention has an effect in that switching between a terminal for making the call via the mobile telephone network and a terminal for making the call via the Internet can be carried out without a bothersome operation.

### BEST MODE FOR CARRYING OUT THE INVENTION

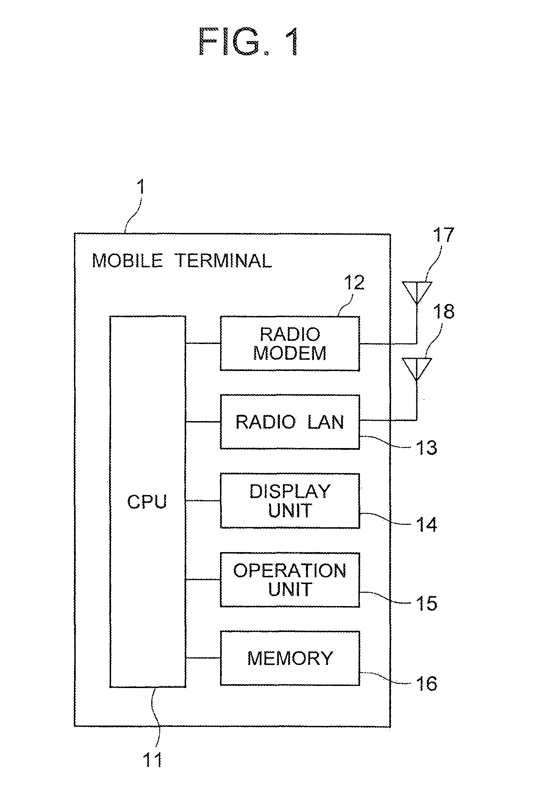

Exemplary embodiments of the invention will be described with reference to the drawings. Fig. 1 is a block diagram showing a configuration of a mobile terminal according to an exemplary embodiment of the invention. In Fig. 1, the mobile terminal 1 is configured including a CPU (central processing unit) 11, a radio modem 12 and an antenna 17 for originating and receiving calls with the other party via the mobile telephone network, a radio LAN function unit 13 and an antenna 18 for originating and receiving calls with the other party via a network [e.g., Internet network, radio LAN (Local Area Network) etc.], a display unit 14, an operation unit 15, and a memory 16 for storing programs executed by the CPU 11 and information etc. used when executing the programs.

The radio modem 12 is connected with the antenna 17 for performing a normal voice communication etc., where communication is exchanged with a base station (not shown) to perform the normal voice communication. The radio LAN function unit 13 is connected with the radio LAN antenna 18 to transmit/receive electric wave to/from the radio LAN base unit (not shown), where the electric wave is transmitted to and received from the radio LAN unit to connect to the network.

The display unit 14 is a display device such as an LCD (Liquid Crystal Display) for displaying various operation contents, messages, and the like. The operation unit 15 includes a dial key and various keys such as arrow key. The memory 16 stores information on setting information and internal information (e.g., telephone directory), program executed by the CPU 11, and the like.

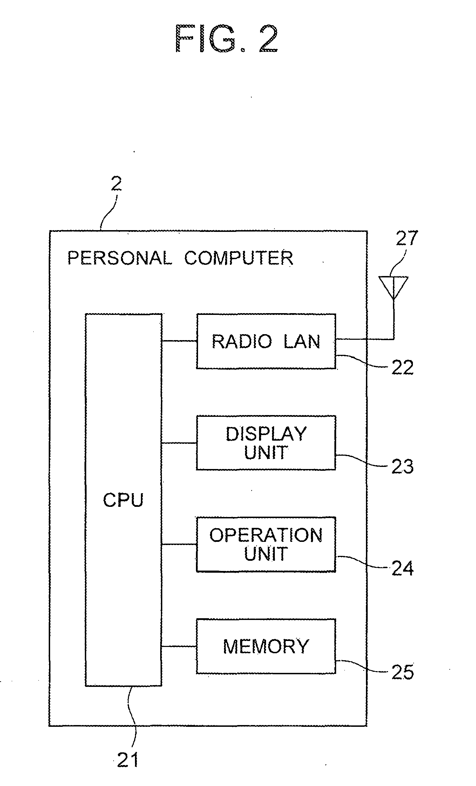

Fig. 2 is a block diagram showing a configuration of a personal computer according to one exemplary embodiment of the invention. In Fig. 2, the personal computer 1 is configured including a CPU (central processing unit) 21, a radio function unit 22 and an antenna 27 for originating and receiving calls with the other party via a network [e.g., Internet network, radio LAN (Local Area Network) etc.], a display unit 23, an operation unit 24, and a memory 25 for storing programs executed by the CPU 21 and information etc. used when executing the programs.

The radio LAN function unit 22 is connected with the radio LAN antenna 27 to transmit/receive electric wave to/from the radio LAN base unit (not shown), where the electric wave is transmitted to and received from the radio LAN base unit to connect to the network.

The display unit 23 is a display device such as an LCD for displaying various operation contents, messages, and the . like. The operation unit 24 includes a dial key and various keys such as arrow key. The memory 25 stores information such as setting information and internal information (e.g., telephone directory), program executed by the CPU 21, and the like.

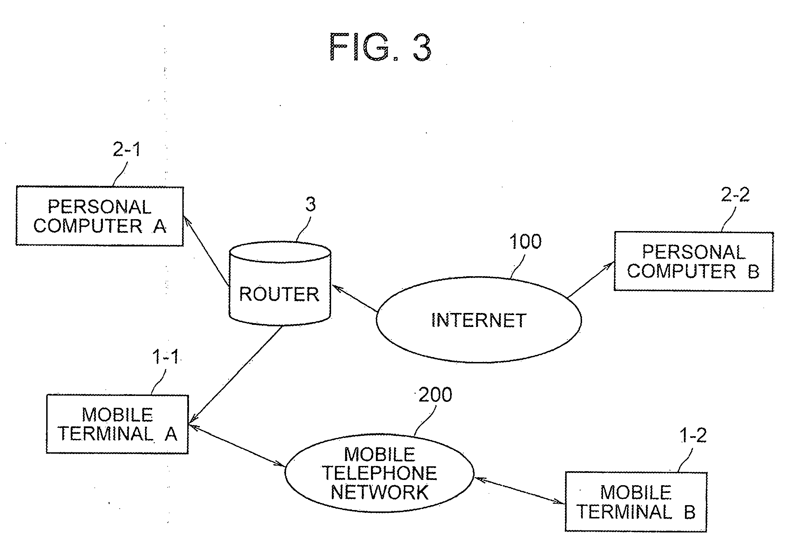

Fig. 3 is a block diagram showing a configuration of a communication system according to one exemplary embodiment of the invention. In Fig. 3, the communication system according to the exemplary embodiment of the invention is configured by mobile terminals (A, B) 1-1, 1-2; personal computers (A, B) 2-1, 2-2; a router 3 for connecting the mobile terminal (A) 1-1 and the personal computer (A) 2-1 to an Internet network 100; the Internet network 100 connected with the router 3 and the personal computer (B) 2-2; and a mobile telephone network 200 connected with the mobile terminals (A, B) 1-1, 1-2.

The mobile terminal (A) 1-1 has a configuration shown in Fig. 1, and is connected to the router 3 via the radio LAN function unit 13 and the antenna 18, and can be connected to the personal computer (A) 2-1 and the Internet network 100 via the router 3. The mobile terminal (A) 1-1 can be connected to the mobile terminal (B) 1-2 via the mobile telephone network 200 by the radio modem 12 and the antenna 17. The mobile terminal (B) 1-2 has a configuration excluding the radio LAN function unit 13 and the antenna 18 from the configuration shown in Fig. 1, and can be connected to the mobile terminal (A) 1-1 via the mobile telephone network 200 by the radio modem 12 and the antenna 17.

The personal computer (A) 2-1 is connectable to the Internet network 100, and has a function for performing Internet telephones via the Internet network 100 and is also radio LAN-connected to the mobile terminal (A) 1-1 via the router 3. The personal computer (B) 2-2 is connectable to the Internet network 100, and has a function for performing Internet telephones via the Internet network 100.

The personal computer (A) 2-1 can control the mobile terminal (A) 1-1, which is radio LAN-connected via the router 3, so that the Internet telephone can be originated and received, and voice communication via the mobile terminal (A) 1-1 can be made.

In such configuration,from the personal computer (A) 2-1, the Internet telephone call can be made to the personal computer (B) 2-2 via the router 3 and the Internet network 100, and the mobile telephone call can be made to the mobile terminal (B) 1-2 via the router 3 and the mobile terminal (A) 1-1. In the personal computer (A) 2-1, the Internet telephone from the personal computer (B) 2-2 can be received via the router 3 and the Internet network 100, and the mobile telephone call from the mobile terminal (B) 1-2 can be received via the router 3 and the mobile terminal (A) 1-1.

Furthermore, the mobile telephone call can be forwarded to the personal computer (A) 2-1. In this case, when the mobile terminal (B) 1-2 makes a mobile telephone call to the mobile terminal (A) 1-1, the mobile terminal (A) 1-1 forwards the mobile telephone call from the mobile terminal (B) 1-2 to the personal computer (A) 2-1 to enable communication between the mobile terminal (B) 1-2 and the personal computer (A) 2-1.

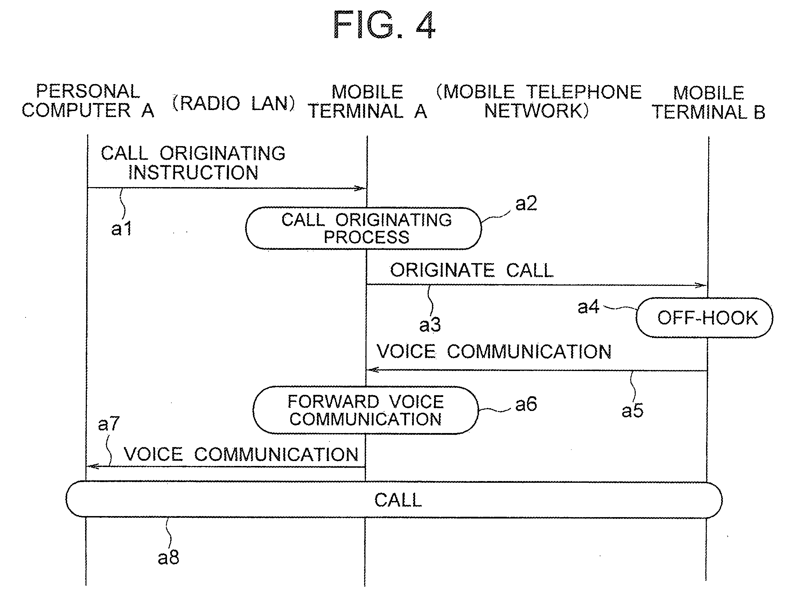

Fig. 4 is a sequence flowchart showing the operation of the communication system according to one exemplary embodiment of the invention. The call originating operation from the personal computer (A) 2-1 to the mobile terminal (B) 1-2 in the communication system according to an exemplary embodiment of the present invention will be described with reference to Fig. 1 to Fig. 4.

When the personal computer (A) 2-1 sends an instruction to the mobile terminal (B) 1-2 for making a call to the mobile terminal (A) 1-1, which is radio LAN-connected via the router 3 (see a1 of Fig. 4),the mobile terminal (A) 1-1 performs a call originating process on the mobile terminal (B) 1-2 via the mobile telephone network 200 according to the call originating instruction from the personal computer (A) 2-1 (see a2, a3 of Fig. 4).

Upon receiving the call of the mobile terminal (A) 1-1 [incoming call from the mobile terminal (A) 1-1] and off-hooking (see a4 of Fig. 4), the mobile terminal (B) 1-2 performs voice communication to the mobile terminal (A) 1-1 (see a5 of Fig. 4). Since the mobile terminal (A) 1-1 is performing the calling process according to the calling instruction from the personal computer (A) 2-1, it forwards the voice communication from the mobile terminal (B) 1-2 as it is to the personal computer (A) 2-1 (see a6, a7 of Fig. 4). The call is then established between the mobile terminal (B) 1-2 and the personal computer (A) 2-1 (see a8 of Fig. 4).

Although not shown, when forwarding the incoming call, which is originated from the mobile terminal (B) 1-2 to the mobile terminal (A) 1-1, to the personal computer (A) 2-1, the personal computer (A) 2-1 may send an instruction to forward the incoming call from the mobile terminal (B) 1-2 to the mobile terminal (A) 1-1, which is radio LAN-connected via the router 3, so that the communication can be established between the mobile terminal (B) 1-2 and the personal computer (A) 2-1 with the process similar to the above. Furthermore, although not shown, the incoming call of the Internet telephone to the personal computer (A) 2-1 can be forwarded to the mobile terminal (A) 1-1.

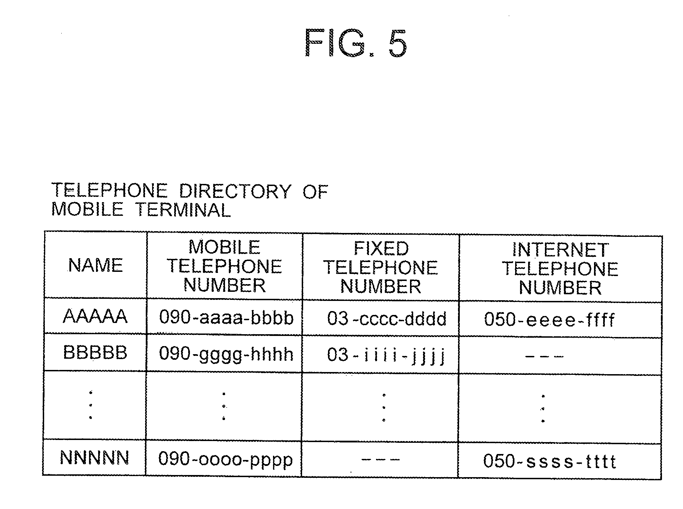

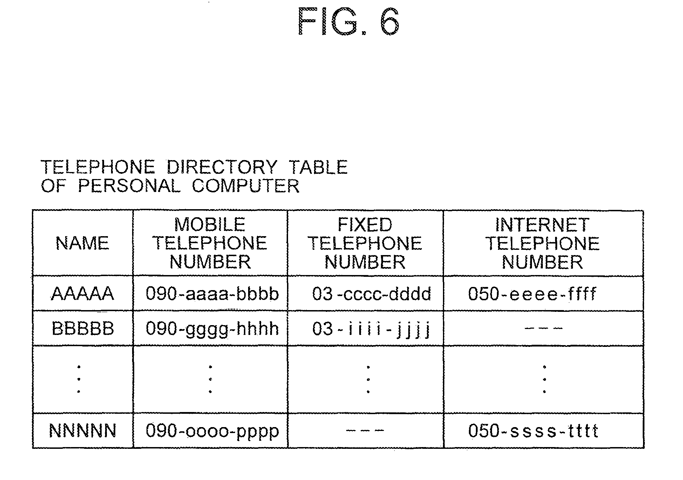

Fig. 5 is a view showing a configuration of a telephone directory of the mobile terminal (A) 1-1 of Fig. 2, and Fig. 6 is a view showing a configuration of a telephone directory table of the personal computer (A) 2-1 of Fig. 3. In Fig. 5 and. Fig. 6, names ("AAAAA", "BBBBB", ..., "NNNNN"), mobile telephone numbers ("090-aaaa-bbbb", "090-gggg-hhhh", ..., "090-oooo-pppp"), fixed telephone numbers (telephone numbers of public network) ("03-cccc-dddd", "03-iiii-jjjj", ..., "---"), and Internet telephone numbers ("050-eeee-ffff", "---", ..., "050-ssss-tttt") are stored in correspondence to each other in the telephone directory of the mobile terminal (A) 1-1 and the telephone directory table of the personal computer (A) 2-1.

In the above exemplary embodiment, the telephone directory of the mobile terminal (A) 1-1 and the telephone directory table of the personal computer (A) 2-1 have the same configuration, but flag information indicating whether or not a call is forwarded to the personal computer (A) 2-1 may be added to the telephone directory of the mobile terminal (A) 1-1, or flag information indicating whether or not a call is forwarded to the mobile terminal (A) 1-1 may be added to the telephone directory table of the personal computer (A) 2-1. In this case, the call can be forwarded to the radio LAN-connected destination based on the flag information. The telephone directory of the mobile terminal (A) 1-1 and the telephone directory table of the personal computer (A) 2-1 may have different configurations.

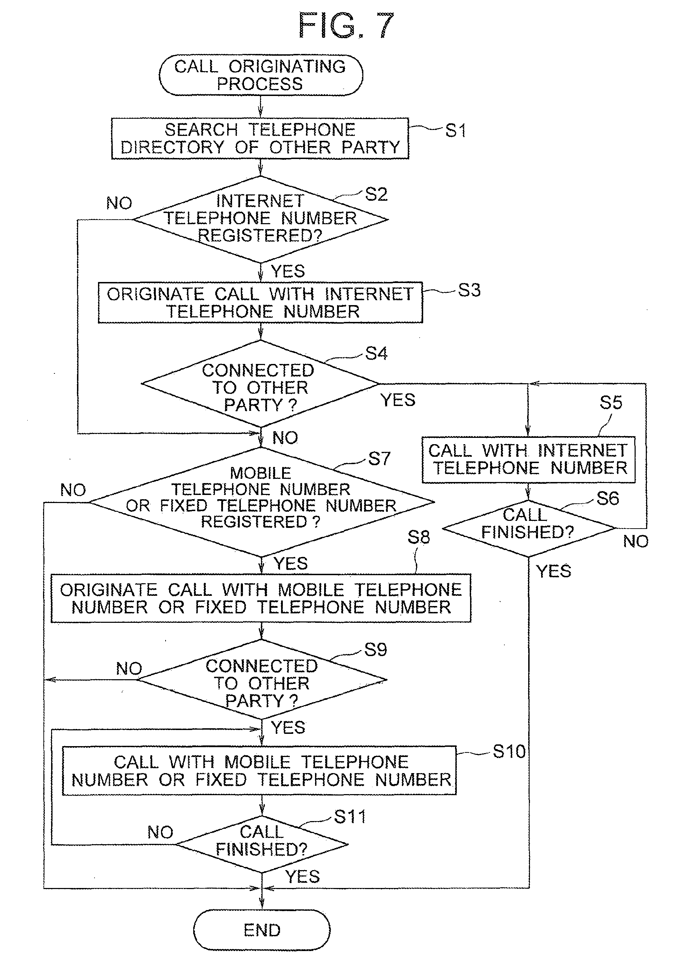

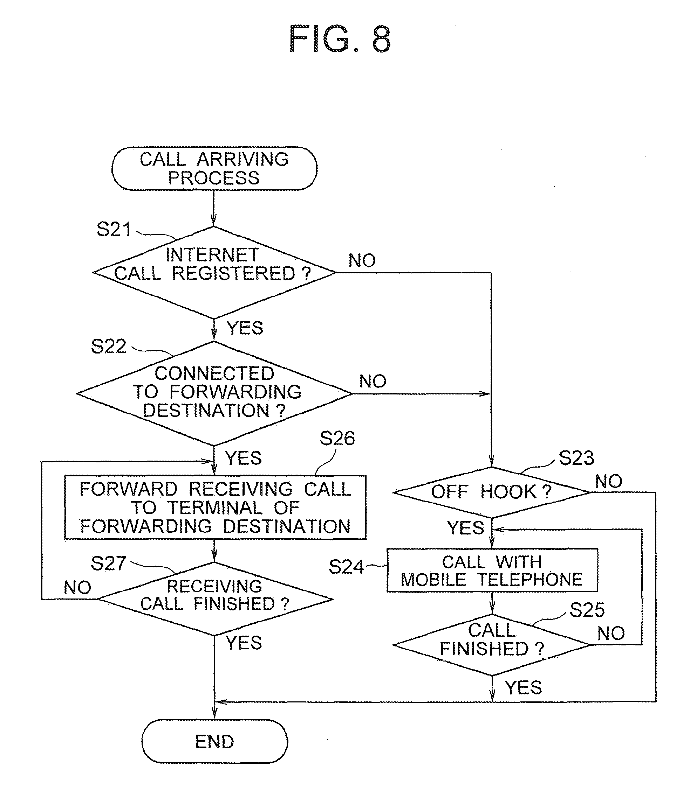

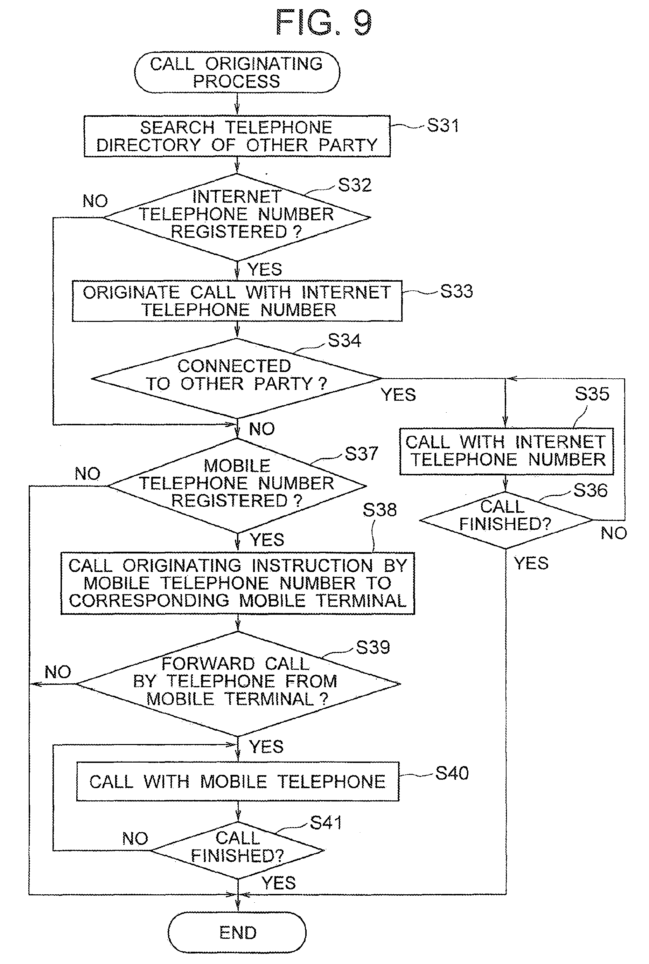

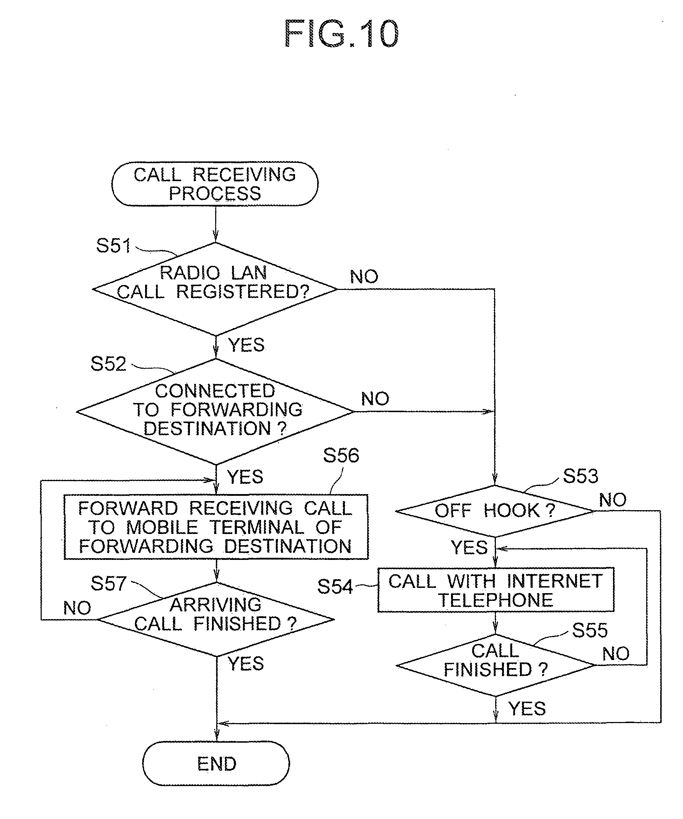

Fig. 7 is a flowchart showing a call originating process of the mobile terminal (A) 1-1 of Fig. 3, Fig. 8 is a flowchart showing a call receiving process of the mobile terminal (A) 1-1 of Fig. 3, Fig. 9 is a flowchart showing a call originating process of the personal computer (A) 2-1 of Fig. 3, and Fig. 10 is a flowchart showing a call receiving process of the personal computer (A) 2-1 of Fig. 3. The call originating process and the call receiving process of the mobile terminal (A) 1-1 and the personal computer (A) 2-1 will be described with reference to Fig. 1, Fig. 2, and Fig. 4 to Fig. 10.

The processes shown in Fig. 7 and Fig. 8 are realized by having the CPU 11 of the mobile terminal (A) 1-1 execute the program stored in the memory 16, and the processes shown in Fig. 9 and Fig. 10 are realized by having the CPU 21 of the personal computer (A) 2-1 execute the program stored in the memory 25. The calls from the mobile terminal (A) 1-1 and the personal computer (A) 2-1 are assumed to be set to prioritize the Internet telephone.

When performing the call originating process through the operation unit 15 or according to the call originating instruction from the personal computer (A) 2-1, the mobile terminal (A) 1-1 searches the telephone directory of the other party to be called (step S1 of Fig. 7), and terminates the process if the Internet telephone number of the other party is not registered (step S2 of Fig. 7) and the mobile telephone number nor the fixed telephone number are registered (step S7 of Fig. 7).

If the Internet telephone number of the other party is registered (step S2 of Fig. 5), the mobile terminal (A) 1-1 originates the call with the Internet telephone number (step S3 of Fig. 7). When connected to the other party with the Internet telephone number (step S4 of Fig. 7), the mobile terminal (A) 1-1 performs the call to the other party with the Internet telephone (steps S5, S6 of Fig. 7) until the call is finished. In this case, if the call originating instruction from the personal computer (A) 2-1 is made, the mobile terminal (A) 1-1 forwards the voice communication of the other party to the personal computer (A) 2-1 and performs the call with the other party by the Internet telephone.

If not connected to the other party with the Internet telephone (step S4 of Fig. 7), or the mobile telephone number or the fixed telephone number is registered (step S7 of Fig. 7), the mobile terminal (A) 1-1 originates the call with the mobile telephone number or the fixed telephone number (step S8 of Fig. 7). When connected to the other party with the mobile telephone number or the fixed telephone number (step S9 of Fig. 7), the mobile terminal (A) 1-1 performs the call to the other party with the mobile telephone or the fixed telephone (steps S10, S11 of Fig. 7) until the call is finished. In this case, if the call originating instruction from the personal computer (A) 2-1 is made, the mobile terminal (A) 1-1 forwards the voice communication of the other party to the personal computer (A) 2-1 and performs the call with the other party by the mobile telephone or the fixed telephone.

Upon receiving the call with one of the mobile telephone, or the fixed telephone, or the Internet telephone, the mobile terminal (A) 1-1 checks whether the personal computer (A) 2-1, which is the forwarding destination, is radio connected via the router 3 if the radio LAN call is registered and set (step S21 of Fig. 8) through the operation unit 15 or according to the instruction from the personal computer (A) 2-1 (step S22 of Fig. 8).

If the personal computer (A) 2-1, which is the forwarding destination, is radio LAN-connected, the mobile terminal (A) 1-1 forwards the receiving call (voice communication) to the personal computer (A) 2-1 which is the forwarding destination until the receiving call is finished (steps S26, S27 of Fig. 8).

If the Internet call is not registered or set (step S21 of Fig. 8), or, if the personal computer (A) 2-1 which is the forwarding destination is not radio LAN-connected (step S23 of Fig. 8), the mobile terminal (A) 1-1 checks whether the off-hook operation is performed, and terminates the process if the off-hook operation is not performed. If the off-hook operation is performed, the mobile terminal (A) 1-1 makes the call to the other party through the mobile telephone until the call is finished (steps S24, S25 of Fig. 8).

When performing the call originating process through the operation unit 24, the personal computer (A) 2-1 performs a search in the telephone directory table of the other party to be called (step S31 of Fig. 9), and terminates the process if the Internet telephone number of the other party is not registered (step S32 of Fig. 9), and the mobile telephone number nor the fixed telephone number is registered (step S37 of Fig. 9).

If the Internet telephone number of the other party is registered (step S32 of Fig. 9), the personal computer (A) 2 - 1 performs the call with the Internet telephone number (step S33 of Fig. 9). If connected to the other party with the Internet telephone number (step S34 of Fig. 9), the personal computer (A) 2-1 performs the call to the other party with the Internet, telephone number until the call is finished (Steps S35, S36 of Fig. 9)

If not connected to the other party with the Internet telephone number (S34 of Fig. 9), or the mobile telephone number is registered (step S37 of Fig. 9), the personal computer (A) 2-1 makes the call originating instruction by the mobile telephone number to the corresponding mobile terminal (A) 1-1 (step S38 of Fig. 9) . When the call by the mobile telephone is forwarded to the mobile terminal (A) 1-1 (step S39 of Fig. 9), the personal computer (A) 2-1 performs the call with the other party with the mobile telephone until the call is finished (steps S40, S41 of Fig. 9).

Upon receiving the call with one of the mobile telephone, the fixed telephone, or the Internet telephone, the personal computer (A) 2-1checks whether the mobile terminal (A) 1-1, which is the forwarding destination, is radio LAN-connected via the router 3 if the radio LAN call is registered and set (step S51 of Fig. 10) through the operation unit 24 (step S52 of Fig. 10).

If the mobile terminal (A) 1-1 which is the forwarding destination is radio LAN-connected, the personal computer (A) 2-1 forwards the receiving call (voice communication) to the mobile terminal (A) 1-1 which is the forwarding destination until the receiving call is finished (steps S56, S57 of Fig. 10).

If the radio LAN call is not registered or set (step S51 of Fig. 10), or, if the mobile terminal (A) 1-1 which is the forwarding destination is not radio LAN-connected (step S53 of Fig. 10), the personal computer (A) 2-1 checks whether the off-hook operation is performed, and terminates the process if the off-hook operation is not performed. If the off-hook operation is performed, the personal computer (A) 2-1 makes the call to the other party through the Internet telephone until the call is finished (steps S54, S55 of Fig. 10).

Thus, in the exemplary embodiment, the radio LAN function 13 is loaded in the mobile terminal (A) 1-1, the mobile terminal (A) 1-1 is operated via radio LAN from the personal computer (A) 2-1 to originate calls, or inversely, the calls received at the mobile terminal (A) 1-1 are forwarded to the personal computer (A) 2-1 via radio LAN to realize the call, so that the switching between a terminal for making the call via the mobile telephone network 200 and a terminal for making a call via the Internet network 100 can be performed without bothersome operation.

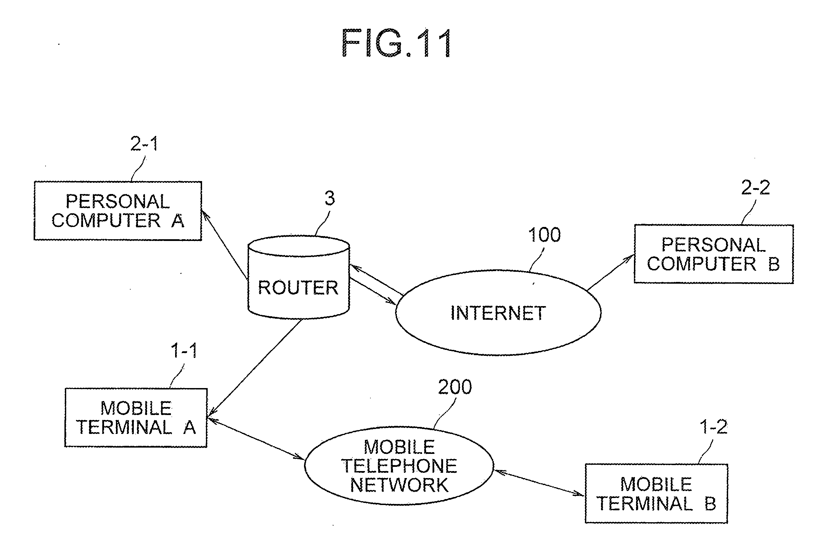

Fig. 11 is a block diagram showing a configuration of a communication system according to another exemplary embodiment of the invention. In Fig. 11, in the communication system according to another exemplary embodiment of the invention, the configuration and the operation are similar to the communication system according to one exemplary embodiment of the invention shown in Fig. 3 other than that the mobile terminal (A) 1-1 is connected to the personal computer (A) 2-1 via the Internet network 100.

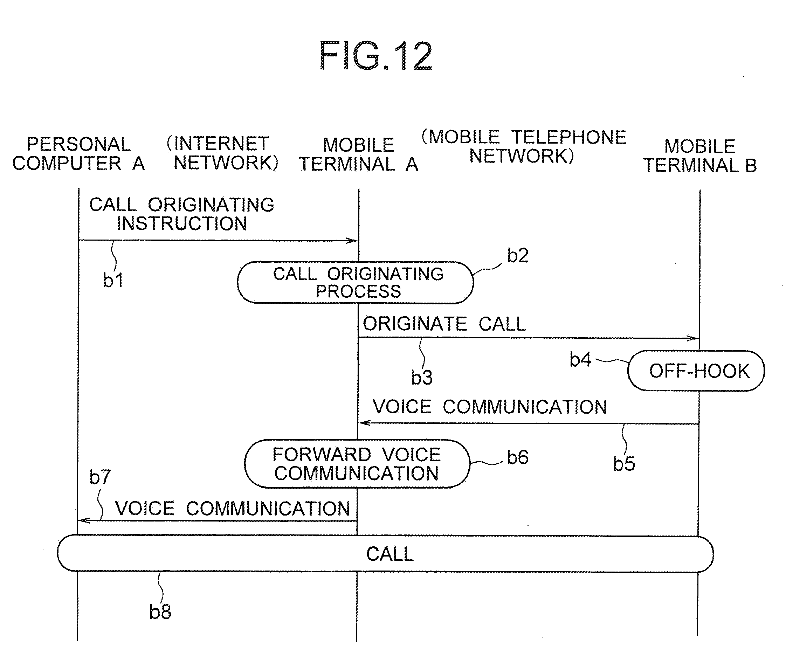

Fig. 12 is a sequence chart showing the operation of the communication system according to another exemplary embodiment of the invention. The calling operation from the personal computer (A) 2-1 to the mobile terminal (B) 1-2 in the communication system according to another exemplary embodiment of the invention will be described with reference to Fig. 11 and Fig. 12.

When the personal computer (A) 2-1 sends an instruction to call the mobile terminal (B) 1-2 to the mobile terminal (A) 1-1, which is connected via the router 3 and the Internet network 100 (see b1 of Fig. 12), the mobile terminal (A) 1-1 performs the call originating process to the mobile terminal (B) 1-2 via the mobile telephone network 200 according to the call originating instruction from the personal computer (A) 2-1 (see b2, b3 of Fig. 12).

Upon receiving the call of the mobile terminal (A) 1-1 [arriving call from the mobile terminal (A) 1-1] and off-hooking (see b4 of Fig. 12), the mobile terminal (B) 2-1 performs a voice communication to the mobile terminal (A) 1-1 (see b5 of Fig. 12). Since the mobile terminal (A) 1-1 is performing the call originating process according to the call originating instruction from the personal computer (A) 1-1, it forwards the voice communication from the mobile terminal (B) 1-2 as it is to the personal computer (A) 2-1 (see b6, b7 of Fig. 12). The call is then established between the mobile terminal (B) 1-2 and the personal computer (A) 1-2 (see b8 of Fig. 12)

Therefore, in the exemplary embodiment, the mobile terminal (A) 1-1 is operated via radio LAN from the personal computer (A) 2-1 to originate calls, or to forward the calls received at the mobile terminal (A) 1-1 to the personal computer (A) 2-1 via radio LAN to realize the call, so that the switching between a terminal for making a call via the mobile telephone network 200 and a terminal for making a call via the Internet network 100 can be performed without bothersome operation, similar to the communication system according to one exemplary embodiment of the invention described above. Furthermore, in the exemplary embodiment, the operation and the forwarding are possible even at outside the communication range of the radio LAN, that is, even if the personal computer (A) 2-1 and the mobile terminal (A) 1-1 are at remote locations from each other.

The present invention has been described on the mobile terminals (A, B) 1-1, 1-2 and the personal computers (A, B) 2-1, 2-2 in each exemplary embodiment, but mobile telephones, PHS (Personal Handy-phone System), PDAs (Personal Digital Assistant) and the like can be used as the mobile terminals as long as the mobile telephone function and the radio LAN function can be loaded, and information terminal such as work station other than the personal computer can be used as long as the Internet telephone function and the radio LAN function can be ioaded.

while the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claim.

### BRIEF DESCRIPTION OF THE DRAWINGS

Fig. 1 is a block diagram showing a configuration of a mobile terminal according to one exemplary embodiment of the invention;
Fig. 2 is a block diagram showing a configuration of a mobile terminal according to one exemplary embodiment of the invention;
Fig. 3 is a block diagram showing a configuration of a communication system according to one exemplary embodiment of the invention;
Fig. 4 is a sequence chart showing an operation of the communication system according to one exemplary embodiment of the invention;
Fig. 5 is a view showing a configuration of a telephone directory of the mobile terminal of Fig. 3;
Fig. 6 is a view showing a configuration of a telephone directory table of the personal computer of Fig. 3;
Fig. 7 is a flowchart showing a call originating process of the mobile terminal of Fig. 3;
Fig. 8 is a flowchart showing a call receiving process of the mobile terminal of Fig. 3;
Fig. 9 is a flowchart showing a call originating process of the personal computer of Fig. 3;
Fig. 10 is a flowchart showing a call receiving process of the personal computer of Fig. 3;
Fig. 11 is a block diagram showing a configuration of a communication system according to another exemplary embodiment of the invention; and
Fig. 12 is a sequence chart showing an operation of the communication system according to another exemplary embodiment of the invention.

### DESCRIPTION OF SYMBOLS

- 1: mobile terminal
- 1-1: mobile terminal (A)
- 1-2: mobile terminal (B)
- 2-1: personal computer (A)
- 2-2: personal computer (B)
- 3: router
- 11, 21: CPU
- 12: radio modem
- 13, 22: radio LAN function
- 14, 23: display unit
- 15, 24: operation unit
- 16, 25: memory
- 17, 18, 27: antenna
- 100: Internet network
- 200: mobile telephone network

## Claims

1. A communication system enabling communication between mobile terminals (1) and information terminals (2); the communication system comprising:
the mobile terminals having a radio LAN-connecting function (13);
the information terminals having a radio LAN-connecting function (22);
a mobile telephone network (200) for connecting the mobile terminals; and
a network (100) for connecting the information terminals; wherein
the mobile terminals are connected to the information terminals via the radio LAN-connecting function,
a given information terminal of the information terminals is adapted to control a first mobile terminal of the mobile terminals via the radio LAN-connecting function to make a call to a second mobile terminal of the mobile terminals via the mobile telephone network, and
the first mobile terminal is adapted to forward the call to the given information terminal connected via the radio LAN-connecting function.

2. The communication system according to claim 1,
wherein
the given information terminal is adapted to make a call originating instruction to the first mobile terminal via the radio LAN-connecting function; and
the first mobile terminal is adapted to make a call originating instruction to the second mobile terminal via the mobile telephone network based on the call originating instruction from the given information terminal.

3. The communication system according to claim 1, wherein the given information terminal is radio LAN-connected to the first mobile terminal via a router (3).

4. The communication system according to claim 1, wherein the given information terminal is radio LAN-connected to the first mobile terminal via a router (3) and the network.

5. A mobile terminal (1) used in a communication system for performing communication with an information terminal (2), the mobile terminal comprising:
a radio modem (12); and
a radio LAN function unit (13); wherein
the radio modem is adapted to connect the mobile terminal to a mobile telephone network (200);
the radio LAN function unit is adapted to connect the mobile terminal to the information terminal; and
the mobile terminal is adapted to forward a call to the information terminal connected via the radio LAN;
wherein the mobile terminal, being a first mobile terminal, is adapted to make a call originating instruction to a second mobile terminal via the mobile telephone network based on a call originating instruction from the information terminal.

6. The mobile terminal according to claim 5, wherein the mobile terminal is radio LAN-connected to the information terminal via a router.

7. The mobile terminal according to claim 5, wherein the mobile terminal is radio LAN-connected to the information terminal via a router and a network.

8. An information terminal (2) used in a communication system for performing communication with a mobile terminal (1), the information terminal comprising:
a radio modem; and
a radio LAN function unit (22); wherein
the radio modem is adapted to connect the information terminal to a network;
the radio LAN function unit is adapted to connect the information terminal to the mobile terminal;
wherein the information terminal is adapted to make a call originating instruction to the mobile terminal; and wherein the information terminal is adapted to receive the call forwarded from the mobile terminal via the radio LAN.

9. The information terminal according to claim 8,
wherein the information terminal is radio LAN-connected to the mobile terminal via a router (3).

10. The information terminal according to claim 8,
wherein the information terminal is radio LAN-connected to the mobile terminal via a router (3) and the network.

11. A communication method for performing communication between mobile terminals (1) and information terminals (2); the method comprising:
connecting a first mobile terminal of the mobile terminals and a given information terminal of the information terminals via radio LAN;
controlling the first mobile terminal with the given information terminal via radio LAN to make a call to a second mobile terminal of the mobile terminals and the given information terminal via a mobile telephone network; and
forwarding the call by the first mobile terminal to the given information terminal connected via the radio LAN.

12. The communication method according to claim 11, further comprising:
making a call originating instruction from the radio LAN-connected given information terminal to the first mobile terminal; and
relaying the first mobile terminal activated based on the call originating instruction to ensure a communication path via the mobile telephone network between the given information terminal and the second mobile.

13. A program for performing communication between mobile terminals (1) and information terminals (2) comprising program code which when executed by a computer carries out the method of claim 11 or 12.

## Patentansprüche

1. Kommunikationssystem zum Ermöglichen von Kommunikation zwischen mobilen Endgeräten (1) und Informationsendgeräten (2); wobei das Kommunikationssystem umfasst:
die mobilen Endgeräte, die eine Funk-LAN-Verbindungsfunktion (13) haben.;
die Informationsendgeräte, die eine Funk-LAN-Verbindungsfunktion (22) haben;
ein Mobiltelefon-Netzwerk (200) zum Verbinden der mobilen Endgeräte; und
ein Netzwerk (100) zum Verbinden der Informationsendgeräte; wobei
die mobilen Endgeräte mit den Informationsendgeräten über die Funk-LAN-Verbindungsfunktion verbunden sind,
ein bestimmtes Informationsendgerät der Informationsendgeräte ausgelegt ist, ein erstes mobiles Endgerät der mobilen Endgeräte über die Funk-LAN-Verbindungsfunktion zu steuern, um einen Anruf an ein zweites mobiles Endgerät der mobilen Endgeräte über das Mobiltelefon-Netzwerk zu herzustellen, und
das erste mobile Endgerät ausgelegt ist, den Anruf an das bestimmte Informationsendgerät, das über die Funk-LAN-Verbindungsfunktion verbunden ist, zu übermitteln.

2. Kommunikationssystem nach Anspruch 1, wobei das bestimmte Informationsendgerät ausgelegt ist, 1 eine Anrufs-Ursprungs-Anweisung an das zweite mobile Endgerät über das Mobiltelefon-Netzwerk herzustellen; und
das erste mobile Endgerät ausgelegt ist, eine Anrufs-Ursprungs-Anweisung an das erste mobile Endgerät über die Funk-LAN-Verbindungsfunktion basierend auf der Anrufs-Ursprungs-Anweisung von dem bestimmten Informationsendgerät herzustellen.

3. Kommunikationssystem nach Anspruch 1, wobei das bestimmte Informationsendgerät mit dem ersten mobilen Endgerät über einen Router (3) Funk-LAN-verbunden ist.

4. Kommunikationssystem nach Anspruch 1, wobei das bestimmte Informationsendgerät mit dem ersten mobilen Endgerät über einen Router (3) und das Netzwerk Funk-LAN-verbunden ist.

5. Mobiles Endgerät (1), das in einem Kommunikationssystem zum Ausführen von Kommunikation mit einem Informatiansendgerät (2) verwendet wird, wobei das mobile Endgerät umfasst:
ein Funk-Modem (12); und
eine Funk-LAN-Funktions-Einheit (13); wobei das Funk-Modem ausgelegt ist, das mobile Endgerät mit einem Mobiltelefon-Netzwerk (200) zu verbinden;
die Funk-LAN-Funktions-Einheit ausgelegt ist das mobile Endgerät mit dem Informationsendgerät zu verbinden; und
das mobile Endgerät ausgelegt ist, einen Anruf an das Informationsendgerät, das über das Funk-LAN verbunden ist, zu. Übermitteln;
wobei das mobile Endgerät, das ein erstes mobiles Endgerät ist, ausgelegt ist, eine Anrufs-Ursprungs-Anweisung an ein zweites mobiles Endgerät über das Mobiltelefon-Netzwerk, basierend auf einer Anrufs-Ursprungs-Anweisung von dem Informationsendgerät, herzustellen.

6. Mobiles Endgerät nach Anspruch 5, wobei das mobile Endgerät mit dem Informationsendgerät über einen Router Funk-LAN-verbunden ist.

7. Mobiles Endgerät nach Anspruch 5, wobei das mobile Endgerät mit dem Informationsendgerät über einen Router und ein Netzwerk Funk-LAN-verbunden ist.

8. Informationsendgerät (2), das in einem Kommunikationssystem zum Ausführen von Kommunikation mit einem mobilen Endgerät (1) verwendet wird, wobei das Informationsendgerät umfasst:
ein Funk-Modem; und
eine Funk-LAN-Funktions-Einheit (22); wobei
das Funk-Modem ausgelegt ist, das Informationsendgerät mit einem Netzwerk zu verbinden;
die Funk-LAN-Funktions-Einheit ausgelegt ist, das Informationsendgerät mit dem mobilen Endgerät zu verbinden;
wobei das Informationsendgerät ausgelegt ist, eine Anrufs-Ursprungs-Anweisung an das mobile Endgerät herzustellen; und
wobei das Informationsendgerät ausgelegt ist, den von dem mobilen Endgerät über das Funk-LAN übermittelten Anruf zu empfangen.

9. Informationsendgerät nach Anspruch 8, wobei das Informationsendgerät mit dem mobilen Endgerät über einen Router (3) Funk-LAN-verbunden ist.

10. Informationsendgerät nach Anspruch 8, wobei das Informationsendgerät mit dem mobilen Endgerät über einen Router (3) und das Netzwerk Funk-LAN-verbunden ist.

11. Kommunikationsverfahren zum Ausführen von Kommunikation zwischen mobilen Endgeräten (1) und Informationsendgeräten (2); wobei das Verfahren umfasst:
Verbinden eines ersten mobilen Endgerätes der mobilen Endgeräte und einem bestimmten Informationsendgerät der Informationsendgeräte über ein Funk-LAN;
Steuern des ersten mobilen Endgeräts mit dem bestimmten Informationsendgerät über Funk-LAN, um einen Anruf an ein zweites mobiles Endgerät der mobilen Endgeräte und dem bestimmten Informationsendgerät über ein Mobiltelefon-Netzwerk herzustellen; und
Übermitteln des Anrufs durch das die erste mobile Endgerät an das bestimmte Informationsendgerät, das über das Funk-LAN verbunden ist.

12. Kommunikationsverfahren nach Anspruch 11, weiter umfassend:
Herstellen einer Anru.fs-Ursprungs-Anweisung von dem Funk-LAN-verbundenen bestimmten Informationsendgerät an das erste mobile Endgerät; und
Weiterleiten des ersten mobile Endgerät, das basierend auf der Anrufs-Ursprungs-Anweisung aktiviert ist, um einen Kommunikationsfahrt über das Mobiltelefon-Netzwerk zwischen dem bestimmten Informationsendgerät und dem zweiten mobilen herzustellen.

13. Programm zum Ausführen einer Kommunikation zwischen mobilen Endgeräten (1) und Informationsendgeräten (2), umfassend Programmcode, der, wenn von einem Computer ausgerührt, das Verfahren nach Anspruch 11 oder 12 durchführt.

## Revendications

1. Système de communication permettant une communication entre des terminaux mobiles (1) et des terminaux d'informations (2) ; le système de communication comprenant :
les terminaux mobiles ayant une fonction de connexion par LAN radio (13) ;
les terminaux d'informations ayant une fonction de connexion par LAN radio (22) ;
un réseau de téléphonie mobile (200) pour connecter les terminaux mobiles ; et
un réseau (100) pour connecter les terminaux d'informations ; dans lequel
les terminaux mobiles sont connectés aux terminaux d'informations via la fonction de connexion par LAN radio,
un terminal d'information donné des terminaux d'informations est adapté pour commander un premier terminal mobile des terminaux mobiles via la fonction de connexion par LAN radio pour effectuer un appel vers un second terminal mobile des terminaux mobiles via le réseau de téléphonie mobile, et
le premier terminal mobile est adapté pour transférer l'appel au terminal d'information donné connecté via la fonction de connexion par LAN radio.

2. Système de communication selon la revendication 1, dans lequel
le terminal d'information donné est adapté pour effectuer une instruction d'émission d'appel au premier terminal mobile via la fonction de connexion par LAN radio ; et
le premier terminal mobile est adapté pour effectuer une instruction d'émission d'appel au second terminal mobile via le réseau de téléphonie mobile sur la base de l'instruction démission d'appel en provenance du terminal d`information donné.

3. Système de communication selon la revendication 1, dans lequel le terminal d'information donné est connecté par LAN radio au premier terminal mobile via un routeur (3).

4. Système de communication selon la revendication 1, dans lequel le terminal d'information donné est connecté par LAN radio au premier terminal mobile via un routeur (3) et le réseau.

5. Terminal mobile (1) utilisé dans un système de communication pour effectuer une communication avec un terminal d'information (2), le terminal mobile comprenant :
un modem radio (12) ; et
une unité de fonction LAN radio (13) ; dans lequel
le modem radio est adapté pour connecter le terminal mobile à un réseau de téléphonie mobile (200) ;
l'unité de fonction LAN radio est adaptée pour connecter le terminal mobile au terminal d'information ; et
le terminal mobile est adapté pour transférer un appel au terminal d'information connecté via le LAN radio ;
dans lequel le terminal mobile, qui est un premier terminal mobile, est adapté pour effectuer une instruction d'émission d'appel à un second terminal mobile via le réseau de téléphonie mobile sur la base d'une instruction d'émission d'appel en provenance du terminal d'information.

6. Terminal mobile selon la revendication 5, dans lequel le terminal mobile est connecté par LAN radio au terminal d'information via un routeur.

7. Terminal mobile selon la revendication 5, dans lequel le terminal mobile est connecté par LAN radio au terminal d'information via un routeur et un réseau.

8. Terminal d'information (2) utilisé dans un système de communication pour effectuer une communication avec un terminal mobile (1), le terminal d'information comprenant :
un modem radio ; et
une unité de fonction LAN radio (22) ; dans lequel
le modem radio est adapté pour connecter le terminal d'information à un réseau ;
l'unité de fonction LAN radio est adaptée pour connecter le terminal d'information au terminal mobile ;
dans lequel le terminal d'information est adapté pour effectuer une instruction d'émission d'appel au premier terminal mobile ; et dans lequel le terminal d'information est adapté pour recevoir l'appel transféré depuis le terminal mobile via le LAN radio.

9. Terminal d'information selon la revendication 8, dans lequel le terminal d'information est connecté par LAN radio au terminal mobile via un routeur (3).

10. Terminal d'information selon la revendication 8, dans lequel le terminal d'information est connecté par LAN radio au terminal mobile via un routeur (3) et le réseau.

11. Procédé de communication pour effectuer une communication entre des terminaux mobiles (1) et des terminaux d'informations (2), le procédé comprenant :
la connexion d'un premier terminal mobile des terminaux mobiles et d'un terminal d'information donné des terminaux d'informations via LAN radio ;
la commande du premier terminal mobile avec le terminal d'information donné via LAN radio pour effectuer un appel vers un second terminal mobile des terminaux mobiles et le terminal d'information donné via un réseau de téléphonie mobile ; et
le transfert de l'appel par le premier terminal mobile au terminal d'information donné connecté via le LAN radio.

12. Procédé de communication selon la revendication 11, comprenant en outre :
l'exécution d'une instruction d'émission d'appel du terminal d'information donné connecté par LAN radio au premier terminal mobile ; et
le relais du premier terminal mobile activé sur la base de l'instruction d'émission d'appel pour garantir un trajet de communication via le réseau de téléphonie mobile entre le terminal d'information donné et le second mobile.

13. Programme pour effectuer une communication entre des terminaux mobiles (1) et des terminaux d'informations (2) comprenant un code de programme qui, lorsqu'il est exécuté par un ordinateur, réalise le procédé selon la revendication 11 ou 12.
